# EUROPEAN PATENT APPLICATION

(11) **EP 4 742 409 A1**
(43) Date of publication of application: **13.05.2026**
(21) Application number: 25808013.4
(22) Date of filing: 19.05.2025
(51) Int. Cl.: H01M 50/403, H01M 50/42, H01M 50/426, H01M 50/417, H01M 50/491, H01M 50/451, H01M 50/446, H01M 10/052

(54) **METHOD FOR MANUFACTURING SEPARATOR, SEPARATOR MANUFACTURED THEREFROM, AND LITHIUM SECONDARY BATTERY INCLUDING SAME**

(30) Priority: 21.05.2024 KR 20240065882
(71) Applicant: LG Energy Solution, Ltd., Seoul 07335 (KR)
(72) Inventor: KIM, Min-Gyu, Daejeon 34122 (KR); KA, Kyung-Ryun, Daejeon 34122 (KR); KIM, Min-Ji, Daejeon 34122 (KR); KIM, Ji-Hyeon, Daejeon 34122 (KR); HWANG, Seon-Woo, Daejeon 34122 (KR)
(74) Representative: Hoffmann Eitle
(86) International application number: PCT/KR2025/006790
(87) International publication number: WO 2025/244380

(57) **Abstract**

The present disclosure provides a method for manufacturing a separator, the method including (S10) preparing a separator coating slurry composition including pore-inducing particles; inorganic particles; a particle-type binder and a solvent; (S20) applying the separator coating slurry composition to at least one surface of a porous polymer substrate to form a porous coating layer; (S30) removing at least some of the pore-inducing particles of the porous coating layer by an etching solution; and (S40) drying the porous coating layer from which the at least some of the pore-inducing particles have been removed.

## Description

### TECHNICAL FIELD

The present disclosure relates to a method for manufacturing a separator, a separator manufactured thereby and a lithium secondary battery including the same.

This application is based on and claims priority from Korean Patent Application No. 10-2024-0065882 filed on May 21, 2024 with the Korean Intellectual Property Office, the disclosure of which is incorporated herein in its entirety by reference.

### BACKGROUND ART

Non-aqueous secondary batteries including lithium secondary batteries are widely used as power sources for portable electronic devices such as laptop computers, mobile phones, digital cameras or camcorders and electric vehicles.

One component of lithium secondary batteries, a separator is basically required to separate and electrically insulate a positive electrode from a negative electrode and increase permeability of ions, for example, lithium ions based on high porosity in order to increase ionic conductivity. The separator does not participate in electrochemical reactions of secondary batteries, but greatly affects performance and safety of secondary batteries due to its physical properties such as electrolyte wetting, porosity or thermal shrinkage.

However, the separator using a porous polymer substrate shrinks at high temperature, causing internal short circuits, and in the event of thermal runaway, the polymer separator substrate melts, increasing fire risks. Accordingly, approaches have been proposed to overcome the disadvantage of the porous polymer substrate by adding a porous coating layer to one or two surfaces of the porous polymer substrate, the porous coating layer including inorganic particles for overcoming the disadvantage of the porous polymer substrate and a binder.

Meanwhile, the binder included in the porous coating layer may be classified into a particle-type binder and a soluble binder according to whether the binder dissolves in a solvent. In the case of the soluble binder, when applying a slurry for forming the porous coating layer to the surface of the porous substrate, the soluble binder may flow to the surface through the pores of the porous substrate, resulting in the clogged pores of the porous substrate. To prevent this issue, the use of particle-type binders has been proposed. However, in the processes of stacking the negative electrode, the positive electrode and the separator between the negative electrode and the positive electrode and applying heat and pressure, the particle-type binder in the porous coating layer may lose its shape or form a film. In this instance, the binder may block the pores inside the porous coating layer or the pores of the porous polymer substrate, resulting in low porosity of the separator and poor electrolyte wetting. Therefore, there is a need for a method for manufacturing a separator with strong adhesion strength, high ionic conductivity and good electrolyte wetting by using a particle-type binder as a binder, and a separator manufactured thereby.

### DISCLOSURE

### Technical Problem

The present disclosure is designed to solve the above-described technical problems, and specifically, the present disclosure is directed to providing a method for manufacturing a separator having good electrolyte wetting in the presence of a particle-type binder in a porous coating layer, a separator manufactured thereby and a lithium secondary battery including the same.

The present disclosure is further directed to providing a lithium secondary battery having high wettability and permeability by the introduction of pores in various sizes.

### Technical Solution

To achieve the above-described objectives, according to an aspect of the present disclosure, there are provided a separator of the following embodiments, a method for manufacturing the separator, and a lithium secondary battery including the same.

According to a first embodiment, there is provided the method for manufacturing the separator, the method including (S10) preparing a separator coating slurry composition including pore-inducing particles; inorganic particles; a particle-type binder and a solvent; (S20) applying the separator coating slurry composition to at least one surface of a porous polymer substrate to form a porous coating layer; (S30) removing at least some of the pore-inducing particles of the porous coating layer by an etching solution; and (S40) drying the porous coating layer from which the at least some pore-inducing particles have been removed.

According to a second embodiment, in the first embodiment, the pore-inducing particles may be a material that reacts with the etching solution.

According to a third embodiment, in any one of the first and second embodiments, the pore-inducing particles may include silica (SiO₂), titania (TiO₂), zirconia (ZrO₂), or two or more thereof.

According to a fourth embodiment, in any one of the first to third embodiments, the etching solution may include hydrogen fluoride, sodium hydroxide, potassium hydroxide, nitric acid, hydrogen peroxide, carbonic acid, or two or more thereof.

According to a fifth embodiment, in any one of the first to fourth embodiments, in the (S10), an amount of the pore-inducing particles in the separator coating slurry composition may be 20 to 90 parts by weight based on 100 parts by weight of the inorganic particles.

According to a sixth embodiment, in any one of the first to fifth embodiments, a D₅₀ of the pore-inducing particles may be 20 nm to 500 nm.

According to a seventh embodiment, in any one of the first to sixth embodiments, the particle-type binder may include an acrylic particle-type binder, a fluorine-based particle-type binder, or a combination thereof.

According to an eighth embodiment, in any one of the first to seventh embodiments, a glass transition temperature (Tg) of the particle-type binder may be 40°C to 80°C.

According to a ninth embodiment, in any one of the first to eighth embodiments, a D₅₀ of the particle-type binder may be 150 nm to 1 µm.

According to a tenth embodiment, in any one of the first to ninth embodiments, the porous polymer substrate may include polyethylene, polypropylene, polyimide, polyethylene terephthalate, polyamide, polysulfone, polyvinylidene fluoride, polyacrylonitrile, or two or more thereof.

According to an eleventh embodiment, in any one of the first to tenth embodiments, the (S20) may further include (S21) drying the solvent in the separator coating layer slurry composition after applying the slurry composition to the at least one surface of the porous polymer substrate.

According to a twelfth embodiment, in the eleventh embodiment, after the (S21), the method for manufacturing the separator may further include (S22) applying a pressure of 0.5 MPa to 20 MPa to the separator in a temperature condition of 20°C to 85°C for 1 second to 60 seconds.

According to a thirteenth embodiment, in any one of the first to twelfth embodiments, after the (S40), the method for manufacturing the separator may further include (S41) applying a pressure of 0.5 MPa to 20 MPa to the separator in a temperature condition of 20°C to 85°C for 1 second to 60 seconds.

According to a fourteenth embodiment, there is provided a separator manufactured by the method for manufacturing the separator defined in any one of the first to thirteenth embodiments, the separator including the porous polymer substrate; and the porous coating layer present on the at least one surface of the porous polymer substrate, the porous coating layer including the inorganic particles and the particle-type binder, wherein the porous coating layer includes pores formed by the removal of the at least some of the pore-inducing particles by the etching solution.

According to a fifteenth embodiment, in the fourteenth embodiment, a porosity of the separator may be 10 vol% to 50 vol%.

According to a sixteenth embodiment, there is provided a lithium secondary battery including a positive electrode; a negative electrode; an electrolyte solution; and a separator interposed between the positive electrode and the negative electrode, wherein the separator is defined in any one of the fourteenth and fifteenth embodiments.

### Advantageous Effects

The separator according to an embodiment of the present disclosure includes the particle-type binder in the porous coating layer but has pores at locations where pore-inducing particles have been removed, leading to higher porosity than separators using particle-type binders, thereby achieving good electrolyte wetting of the separator.

The separator according to an embodiment of the present disclosure has good electrolyte wetting and high permeability due to the pores of various sizes in the porous coating layer.

### BRIEF DESCRIPTION OF THE DRAWINGS

FIG. 1a is an image of a separator of Example 1 after a wetting test.
FIG. 1b is an image of a separator of Comparative Example 1 after a wetting test.
FIG. 2a shows a scanning electron microscopic (SEM) image of a surface of the separator of Example 1 and an IAM program-assisted masking image of inorganic particles, pores, an acrylic particle-type binder and a fluorine-based particle-type binder.
FIG. 2b shows an SEM image of a surface of the separator of Comparative Example 1 and an IAM program-assisted masking image of inorganic particles, pores, an acrylic particle-type binder and a fluorine-based particle-type binder.

### BEST MODE

The terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

The terms as used herein are used to describe the exemplary embodiments of the present disclosure but not intended to be limiting. The singular forms include the plural forms unless the context clearly indicates otherwise.

### Definition

The terms "comprise", "include" and "have" when used in this specification, specify the presence of the stated elements, but do not preclude the presence or addition of one or more other elements unless the context clearly indicates otherwise.

In this specification, Dₙ refers to a particle size at n% point of cumulative particle size distribution. That is, D₅₀ refers to a particle size at 50% point of cumulative particle size distribution. Furthermore, D₁₀ refers to a particle size at 10% point of cumulative particle size distribution, and D₉₀ refers to a particle size at 90% point of cumulative particle size distribution.

The particle size may be measured using a laser diffraction method. Specifically, the particle size distribution is calculated by dispersing a powder to be measured in a dispersion medium, feeding it into a commercially available laser diffraction particle size measuring instrument (for example, Microtrac S3500) and measuring a difference in diffraction pattern as a function of particle size when particles pass through a laser beam. D₁₀, D₅₀ and D₉₀ may be measured by calculating particle diameters at 10% point, 50% point and 90% point of cumulative particle size distribution in the measuring instrument, respectively.

In this specification, certain terms are provided for convenience of description but not intended to limit the present disclosure. The terms 'left', 'right', 'up' and 'down' as used herein may indicate directions in the drawings to which reference is made and should not be limiting. These terms include the listed words, their derivatives and words of similar meanings.

### Method for manufacturing separator

The present disclosure provides a method for manufacturing a separator for an electrochemical device.

According to an aspect of the present disclosure, the method for manufacturing the separator of the present disclosure includes (S10) preparing a separator coating slurry composition including pore-inducing particles; inorganic particles; a particle-type binder and a solvent; (S20) applying the separator coating slurry composition to at least one surface of a porous polymer substrate to form a porous coating layer; (S30) removing at least some of the pore-inducing particles of the porous coating layer by an etching solution; and (S40) drying the porous coating layer from which the at least some pore-inducing particles have been removed.

Hereinafter, each step of the method for manufacturing the separator will be described in detail.

The method starts with (S10) preparing the separator coating slurry composition including the pore-inducing particles; the inorganic particles; the particle-type binder and the solvent.

In an embodiment of the present disclosure, the pore-inducing particles are a material included in the separator coating slurry composition, and may be removed by reaction with the etching solution after it has been applied to the porous polymer substrate.

In an embodiment of the present disclosure, the pore-inducing particles have a property of being dissolved by the etching solution as described below, and may include organic particles and/or ceramic particles. The pore-inducing particles may include ceramic particles. The ceramic particles are not limited to a particular type and may include any material that is dissolved and removed by the etching solution. For example, the ceramic particles may include silica (SiO₂), titania (TiO₂), zirconia (ZrO₂), or two or more thereof. Chemical reactions, for example, wet etching reactions between the pore-inducing particles in solid state and the etching solution in liquid state may produce ionic products, and the products may be removed through washing. Empty spaces remaining after the removal may be provided as pores.

In an embodiment of the present disclosure, the etching solution may include hydrogen fluoride, sodium hydroxide, potassium hydroxide, nitric acid, hydrogen peroxide, carbonic acid, or two or more thereof. In this case, the etching rate may be different depending on the type of etching solution and its combination.

For example, in an embodiment of the present disclosure, in case where silica (SiO₂) is used as the pore-inducing particles and hydrogen fluoride (HF) is used as the etching solution, reaction represented by Formula 1 below may proceed.

SiO₂(s) + 6 HF(aq) → H₂SiF₆(aq) + 2 H₂O(l) ... Formula (1)

For example, in an embodiment of the present disclosure, in case where silica (SiO₂) is used as the pore-inducing particles, and sodium hydroxide (NaOH) is used as the etching solution, when heated, reaction represented by Formula 2 below may proceed.

SiO₂(s) + 2 NaOH(aq) → Na₂SiO₃(aq) + H₂O(l) ... Formula (2)

In an embodiment of the present disclosure, the amount of the pore-inducing particles in the separator coating slurry composition may be 20 to 90 parts by weight or 30 to 80 parts by weight based on 100 parts by weight of the inorganic particles. When the amount of the pore-inducing particles falls within the aforementioned range, the manufactured separator may have good thermal properties, high porosity and high ionic conductivity. In addition, when the amount of the pore-inducing particles falls within the aforementioned range, the inorganic particles in the porous coating layer may maintain a mechanical framework structure together, and when subjected to external pressure such as external forces, the structure of the porous coating layer may not collapse and pores resulting from the pore-inducing particles may be maintained.

In an embodiment of the present disclosure, the size D₅₀ of the pore-inducing particles is not limited to a particular range when the pore-inducing particles perform the role of pores of the separator without destroying the structure of the porous coating layer.

In an embodiment of the present disclosure, the size D₅₀ of the pore-inducing particles may be properly selected within a desired range to control the pore size.

In an embodiment of the present disclosure, the D₅₀ of the pore-inducing particles may be 20 nm to 500 nm, or 50 nm to 200 nm. When the D₅₀ of the pore-inducing particles falls within the aforementioned range, the pore-inducing particles may evenly spread out in the separator coating slurry composition, and the manufactured separator may have optimal porosity.

In an embodiment of the present disclosure, the size of the pores formed by the pore-inducing particles may be substantially equal to the size of the pore-inducing particles. That is, the size of the pores induced by the pore-inducing particles may be in a range of 80 vol% to 120 vol%, 90 vol% to 110 vol%, 95 vol% to 105 vol%, or 98 vol% to 102 vol% based on 100 vol% of the pore-inducing particles. In other words, when the pore-inducing particles are used, the pore size in the separator may be controlled.

In an embodiment of the present disclosure, the porous coating layer preferably has even pore size for uniform ionic conductivity of the separator throughout the entire surface. Accordingly, to this end, the pore-inducing particles included in the porous coating layer preferably have even particle size and the aforementioned average particle size at the same time. Furthermore, when the pore-inducing particles have uneven particle size, the porous coating layer may tend to have low thickness uniformity.

In an embodiment of the present disclosure, the pore-inducing particles preferably have a monomodal particle size distribution. In this specification, monomodal may be defined as a distribution having the standard deviation in a range of 1% or more and less than 40%, and preferably 1% or more and 35% or less when analyzing using a particle size analyzer (Dynamic Light Scattering: DLS, Nicomp 380). Bimodal or multimodal may be a distribution having the standard deviation of 40% or more when determining the particle size and its distribution using the particle size analyzer. When the standard deviation is 40% or more, two or more particle size peaks may be found.

In a specific embodiment of the present disclosure, the inorganic particles are not limited to a particular one and may include any electrochemically stable one. That is, the inorganic particles that may be used in the present disclosure are not limited to a particular type and may include any type of inorganic particles in which oxidation and/or reduction reaction does not occur in the operating voltage range (for example, 0 to 5 V vs Li/Li+) of the electrochemical device applied. In particular, when inorganic particles having high dielectric constant are used as the inorganic particles, it may contribute to the increased degree of dissociation of an electrolyte salt, for example, a lithium salt, in the liquid electrolyte, thereby improving ionic conductivity of the electrolyte solution.

By the above-described reasons, the inorganic particles preferably include high-dielectric constant inorganic particles having the dielectric constant of 5 or more, and preferably 10 or more. Non-limiting examples of the inorganic particles having the dielectric constant of 5 or more include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂, or a mixture thereof.

In addition, the inorganic particles may include inorganic particles having the ability to transport lithium ions, i.e., inorganic particles that contain lithium but do not store lithium and have the function of moving lithium ions. Non-limiting examples of the inorganic particles having the ability to transport lithium ions include lithium phosphate (Li₃PO₄), lithium titanium phosphate (LixTiy(PO₄)₃, 0 < x < 2 , 0 < y < 3 ), lithium aluminum titanium phosphate (LiₓAl_{y}Ti_{z}(PO₄)₃, 0 < x < 2, 0 < y <1, 0 < z < 3), (LiAlTiP)ₓO_{y}-based glass (0 < x < 4 , 0 < y < 13) such as 14Li₂O-9Al₂O₃-38TiO₂-39P₂O₅, lithium lanthanum titanate (LiₓLa_{y}TiO₃, 0 < x < 2 , 0 < y < 3), lithium germanium thiophosphate (LiₓGe_{y}P_{z}S_{w}, 0 < x < 4, 0< y < 1, 0 < z < 1, 0 < w < 5) such as Li_{3.25}Ge_{0.25}P_{0.75}S₄, lithium nitride (LiₓN_{y}, 0 < x < 4, 0 < y < 2) such as Li₃N, SiS₂-based glass (LiₓSi_{y}S_{z}, 0 < x < 3, 0 <y < 2, 0 < z < 4) such as Li₃PO₄-Li₂S-SiS₂, P₂S₅-based glass (LiₓP_{y}S_{z}, 0 < x < 3, 0< y < 3, 0 < z < 7) such as LiI-Li₂S-P₂S₅, or a mixture thereof.

In an embodiment of the present disclosure, in the porous coating layer, the inorganic particles are packed in contact with each other and held together by the particle-type binder to form interstitial volume between the inorganic particles, and the interstitial volume between the inorganic particles become voids that form the pores.

That is, the particle-type binder may bind the inorganic particles to cause them to stick together and connect and hold the inorganic particles together. In addition, the pores in the porous coating layer may be formed by the voids resulting from the interstitial volume between the inorganic particles, and may be a space defined by the inorganic particles substantially in close contact with each other within the closely packed or densely packed structure by the inorganic particles.

In an embodiment of the present disclosure, as the inorganic particles are held together, the structure of the porous coating layer may not collapse when the separator is subjected to external pressure.

In an embodiment of the present disclosure, the porous coating layer of the present disclosure may include both the interstitial volume defined by the inorganic particles substantially in close contact with each other by the closely packed or densely packed structure of the inorganic particles and the pores formed by the removal of the pore-inducing particles.

In addition, the average particle size of the inorganic particles is not limited to a particular range, but preferably ranges from 0.1 µm to 1.5 µm to form the coating layer with even thickness and optimal porosity. When the average particle size of the inorganic particles is smaller than 0.1 µm, dispersion may be reduced, and when the average particle size of the inorganic particles is larger than 1.5 µm, the inorganic coating layer may be formed with a larger thickness.

In an embodiment of the present disclosure, the inorganic particles may be included in an amount of 50 wt% or more, for example, in a range of 50 to 97 wt%, or 50 to 95 wt%, or 50 to 90 wt%, based on the total solid content 100 wt% of the separator coating slurry composition.

In an embodiment of the present disclosure, the particle-type binder may have a property of maintaining its original particle shape without a change in shape when it is dispersed in the solvent. Specifically, the particle-type binder may refer to a binder that exists in a particulate state within aqueous solvents. Specifically, the particle-type binder may refer to a type of binder that has low solubility in aqueous solvents and is dispersed in particulate phase within the aqueous solvents.

In an embodiment of the present disclosure, the particle-type binder may include an acrylic particle-type binder, a fluorine-based particle-type binder, or a combination thereof.

In an embodiment of the present disclosure, when the particle-type binder includes the acrylic particle-type binder and the fluorine-based particle-type binder, a weight ratio of the acrylic particle-type binder to the fluorine-based particle-type binder may be 1:99 to 99:1, 10:90 to 90:10, or 20:80 to 80:20. When the weight ratio of the acrylic particle-type binder to the fluorine-based particle-type binder falls within the aforementioned range, adhesion strength (wet adhesion strength) of the separator in wet condition in which the separator is filled with the electrolyte solution and adhesion strength (dry adhesion strength) of the separator in dry condition may be improved.

In an embodiment of the present disclosure, the acrylic particle-type binder may include, for example, an acrylic homopolymer, i.e., a polymer composed of a single acrylic monomer, or a copolymer of the acrylic monomer with another monomer. For example, the acrylic particle-type binder may include poly(methylmethacrylate), poly(ethylhexyl acrylate), poly(butylacrylate), poly(acrylonitrile), a copolymer of ethylhexyl acrylate and methyl methacrylate, a copolymer of butylacrylate and methyl methacrylate, an ethyl acrylate-acrylic acid-N,N-dimethylacrylamide copolymer, an ethyl acrylate-acrylic acid-2-(dimethylamino)ethyl acrylate copolymer, an ethyl acrylate-acrylic acid-N,N-diethylacrylamide copolymer, an ethyl acrylate-acrylic acid-2-(diethylamino)ethyl acrylate copolymer, or a mixture of two or more thereof.

In an embodiment of the present disclosure, the fluorine-based particle-type binder may include, for example, a polyvinylidene fluoride (PVDF) homopolymer, or a copolymer of vinylidene fluoride and another monomer. For example, the fluorine-based particle-type binder may include a copolymer of a repeating unit derived from vinylidene fluoride and a repeating unit derived from at least one selected from trifluoroethylene (TrFE), tetrafluoroethylene (TFE), hexafluoropropylene (HFP), trichloroethylene (TrCE), trichlorofluoroethylene (TCFE), chlorotrifluoroethylene (CTFE), polymethylmethacrylate (PMMA) and polyvinylacetate (PVAc), or a mixture of two or more thereof.

In an embodiment of the present disclosure, the glass transition temperature Tg of the particle-type binder may be 40°C to 80°C, or 50°C to 70°C. The glass transition temperature Tg may, for example, indicate a value measured by dynamic mechanical analysis (DMA) or a differential scanning calorimeter (DSC) (TA Instrument). For example, the glass transition temperature may indicate a value measured according to the DMA method specified in ASTM D4065. When the particle-type binder has the aforementioned glass transition temperature, the particle-type binder may form a film by the collapse of the structure under the predetermined temperature and pressure conditions in the manufacture of the separator.

In an embodiment of the present disclosure, the D₅₀ of the particle-type binder may be 150 nm to 1 µm, or 200 nm to 800 nm. When the size of the particle-type binder falls within the aforementioned range, adhesion strength and porosity of the separator may be improved.

In an embodiment of the present disclosure, the amount of the particle-type binder in the separator coating slurry composition may be 20 to 80 parts by weight based on 100 parts by weight of the inorganic particles. When the amount of the particle-type binder falls within the aforementioned range, adhesion strength of the manufactured electrode may be improved.

In an embodiment of the present disclosure, the particle-type binder may, for example, have a single-phase particle structure or a multi-phase particle structure such as core-shell or core-first shell-second shell.

In an embodiment of the present disclosure, the particle-type binder may, for example, have a spherical, elliptical, oval, platy or irregular particle shape.

In an embodiment of the present disclosure, when preparing the separator coating slurry composition, the solvent may include water or an aqueous solvent including water. Furthermore, when there are limits to drying speed and temperature, methanol, ethanol or isopropyl alcohol having lower boiling point than water may be used as a co-solvent.

Subsequently, (S20) the separator coating slurry composition is applied to at least one surface of the porous polymer substrate to form the porous coating layer.

In an embodiment of the present disclosure, the porous polymer substrate refers to a substrate that has pores inside and acts as a porous ion-conducting barrier to prevent electrical contact between the negative electrode and the positive electrode while allowing ions to pass through. The pores are interconnected to each other, allowing gas or liquid to pass from one side of the substrate to the other side.

The material of the porous polymer substrate may include an organic or inorganic material having electrical insulating properties. In particular, from the perspective of a shutdown function for the substrate, thermoplastic resin is a preferred material of the substrate. Here, the shutdown function refers to functionality of the thermoplastic resin that melts and closes the pores of the porous substrate to stop ion migration in order to prevent thermal runaway of the battery when the temperature of the battery rises. The thermoplastic resin may preferably include thermoplastic resin having the melting point of less than 200°C.

In particular, in an embodiment of the present disclosure, the porous polymer substrate is not limited to a particular type and may include any material that does not cause physical/chemical reaction with the components of the etching solution due to chemical resistance. The porous polymer substrate may include, for example, polyethylene, polypropylene, polyimide, polyethylene terephthalate, polyamide, polysulfone, polyvinylidene fluoride, polyacrylonitrile, or two or more thereof, according to the type of etching solution used.

In the present disclosure, the porous polymer substrate preferably has a thickness of 3 µm to 15 µm, or 5 µm to 15 µm. When the thickness is below the aforementioned value, the function of the conducting barrier is insufficient, and in contrast, when the thickness is above the aforementioned range (i.e., too thick), resistance of the separator may increase so much.

In an embodiment of the present disclosure, the weight average molecular weight of the porous substrate may be 100,000 to 5,000,000. When the weight average molecular weight is smaller than 100,000, it may be difficult to ensure sufficient mechanical properties. In addition, when the weight average molecular weight is larger than 5,000,000, the shutdown characteristics may not work properly or forming may become difficult. In addition, the puncture strength of the porous polymer substrate may be 300 gf or more to improve the production yield. The puncture strength of the porous substrate refers to the maximum puncture load (gf) measured by a puncture test in the conditions of a needle tip curvature radius of 0.5 mm and a puncture speed of 4 mm/sec using a Kato tech KES-G5 handy compression tester.

In an embodiment of the present disclosure, the porous polymer substrate may generally have a pore diameter of 10 nm to 200 nm.

In an embodiment of the present disclosure, the porosity of the separator may be about 30 vol% to 80 vol%. Meanwhile, permeability of the separator may be in a range of about 50 sec/100cc or more and about 250 sec/100cc or less, or 50 sec/100cc or more and 150 sec/100cc.

The porosity or pore size may be measured using BEL JAPAN's BELSORP (BET equipment) using adsorption gas such as nitrogen, or by mercury intrusion porosimetry or capillary flow porosimetry. Specifically, in an embodiment of the present disclosure, the pore size of the porous coating layer may be measured by capillary flow porosimetry. The capillary flow porosimetry is a method that measures the smallest pore diameter in the thickness direction. Accordingly, to measure the pore size of only the porous coating layer by capillary flow porosimetry, the porous coating layer may be separated from the porous substrate and the separated porous coating layer may be wrapped with a non-woven fabric to support it, and in this instance, the pore size of the non-woven fabric may be much larger than the pore size of the coating layer.

The term 'permeability' as used herein refers to the time it takes for 100 cc of air to pass through an object, here, the separator or the porous polymer substrate, and its unit may be indicated by second/100 cc. Permeability may be interchangeably used with breathability, and is generally represented by a Gurley value. In a specific embodiment of the present disclosure, the permeability may be measured in accordance with JIS P8117. In addition, air permeability P1 measured in an object having a thickness T1 may be converted to permeability P2 of the object 20 µm thick by Equation: P2=(P1X20)/T1.

In an embodiment of the present disclosure, the porous coating layer may be coated to a thickness of 1.0 µm to 5.0 µm. When the thickness falls within the aforementioned range, adhesion strength with respect to the electrode may be improved, thereby increasing the cell strength of the battery. In contrast, when the thickness is 5.0 µm or less, it is advantageous in terms of cycling characteristics and resistance characteristics of the battery. When the inorganic coating layer is present on two surfaces of the porous polymer substrate, the thickness of the porous coating layer refers to a measured value of the porous coating layer present on any one surface of the porous polymer substrate.

A commonly used coating method using a Meyer bar, a die coater, a reverse roll coater or a gravure coater may be used to apply the separator coating slurry composition.

Subsequently, (S30) at least some of the pore-inducing particles of the porous coating layer are removed by the etching solution. The step S30 may be performed by dipping the porous polymer substrate having the porous coating layer in the etching solution or spraying the etching solution onto the porous coating layer. In this case, as shown in the above Formula 1 or 2, the pore-inducing particles react with the etching solution to produce an ionic material and are separated from the separator, and the voids formed as a result of dissolving and removing the pore-inducing particles are provided as the pores of the separator. Subsequently, the separator may be washed to remove the reactant solution of the pore-inducing particles and the etching solution. In this instance, the washing solution may include an aqueous solvent including water and/or ethanol.

In an embodiment of the present disclosure, the pores may be formed at the locations of the pore-inducing particles within the porous coating layer. For example, when the pore-inducing particles contact the inorganic particles and/or the pore-inducing particles, the pores may be formed at the locations of the pore-inducing particles upon removal of the pore-inducing particles by the etching solution.

In this instance, the pores formed by the interstitial volume of the inorganic particles are formed by the contact between the inorganic particles as described above, while the pores formed by the removal of the pore-inducing particles are created by the removal of the pore-inducing particles at the location of contact with the inorganic particles and/or the particle-type binder, so they may be distinguished by scanning electron microscopic (SEM) images.

Subsequently, (S40) the porous coating layer from which the at least some pore-inducing particles have been removed is dried. The drying speed and temperature may be different depending on the solvent used. For example, the drying time may be 10 minutes to 10 hours, and the drying temperature may range from 30°C to 100°C. The drying method is not limited to a particular one and may any method that removes the washing solution from the separator, and an appropriate method may include, for example, any one of convection drying, hot air drying, blow drying or natural drying or a combination of two or more thereof. In an embodiment of the present disclosure, the drying may be performed by a vacuum drying method in reduced pressure conditions.

In an embodiment of the present disclosure, the step S20 may further include (S21) drying the solvent in the separator coating layer slurry composition after applying the slurry composition to at least one surface of the porous polymer substrate. In this case, the drying process may include primary drying after forming the porous coating layer, and secondary drying after removing the pore-inducing particles. The drying time of each drying may be 10 minutes to 10 hours, and the drying temperature may range from 30°C to 100°C. The drying method is not limited to a particular one and may include any method that removes the washing solution from the separator, and an appropriate method may include, for example, any one of convection drying, hot air drying, blow drying or natural drying, or a combination of two or more thereof. In an embodiment of the present disclosure, the drying may be performed by a vacuum drying method in reduced pressure conditions.

In an embodiment of the present disclosure, when the method further includes drying the solvent in the separator coating layer slurry composition after applying the slurry composition to at least one surface of the porous polymer substrate, the method may further include a process for applying pressure to the separator after the drying process.

That is, in an embodiment of the present disclosure, after the step S21, the method may further include (S22) applying the pressure of 0.5 MPa to 20 MPa to the separator in the temperature condition of 20°C to 85°C for 1 second to 60 seconds. Specifically, the step S22 may be performed in the conditions of the pressure of 0.5 MPa to 20 MPa, 1 MPa to 10 MPa, or 2 MPa to 8 MPa and the temperature of 20°C to 85°C, 25°C to 80°C, or 25°C to 70°C. In this case, the particle-type binder in the porous coating layer may form a film in a state that the pore-inducing particles are not removed. Subsequently, when at least some of the pore-inducing particles of the porous coating layer are removed by the etching solution, the pores may be formed similarly to the shape of the pore-inducing particles, which may be useful for shape control of the pores. That is, in this case, the particle size distribution of the pore-inducing particles and the pore size distribution may be similar.

In an embodiment of the present disclosure, the drying process may not be performed immediately after applying the separator coating layer slurry composition to at least one surface of the porous polymer substrate, and after removing the at least some pore-inducing particles and drying the porous coating layer, the process for applying pressure to the separator may be further included.

That is, in an embodiment of the present disclosure, after the step S40, the method may further include (S41) applying the pressure of 0.5 MPa to 20 MPa to the separator in the temperature condition of 20°C to 85°C for 1 second to 60 seconds. Specifically, the step S41 may be performed in the conditions of pressure of 0.5 MPa to 20 MPa, 1 MPa to 10 MPa, or 2 MPa to 8 MPa and temperature of 20°C to 85°C, 25°C to 80°C, or 25°C to 70°C. In this case, as the drying step of (S21) is omitted, the process for manufacturing the separator may be simplified.

### Separator

The present disclosure provides a separator for an electrochemical device.

Specifically, the separator includes a porous polymer substrate; a porous coating layer present on at least one surface of the porous polymer substrate and including inorganic particles and a particle-type binder, wherein the porous coating layer includes pores formed by removing at least some of pore-inducing particles by an etching solution.

The porous coating layer may include pores inside and on the surface, and some of the pores may be formed by the removal of the pore-inducing particles by the etching solution.

In an embodiment of the present disclosure, the pores formed by the removal by the etching solution may be formed at the location of contact between the pore-inducing particles and the inorganic particles or the particle-type binder polymer.

In an embodiment of the present disclosure, the porous coating layer may have the pores or vacancies formed by the contact between the inorganic particles and the particle-type binder, or a part of the porous coating layer may have the pores or vacancies formed by the etching of the pore-inducing particles.

The porous coating layer has the pores formed by removing the at least some of the pore-inducing particles by the etching solution, and in this instance, the inorganic particles are not removed by the etching solution, and only the pore-inducing particles are removed to create the pores, leading to a higher ratio of pores and a higher ratio of inorganic particles than a porous coating layer including no pore-inducing particles.

In an embodiment of the present disclosure, the porosity of the separator may be 10 vol% to 50 vol%. The porosity of the separator may be determined by the pore size of the porous polymer substrate and the pore size of the porous coating layer.

In the present disclosure, the electrochemical device includes any device that involves electrochemical reactions, and specific examples include any type of primary battery, secondary battery, fuel cell, solar cell or capacitor such as a supercapacitor device. In the present disclosure, the electrochemical device may preferably include a secondary battery, and more preferably, a lithium ion secondary battery.

### Lithium ion secondary battery

The present disclosure provides a lithium ion secondary battery.

The lithium ion secondary battery of the present disclosure includes a positive electrode; a negative electrode; an electrolyte solution; and a separator interposed between the positive electrode and the negative electrode, wherein the separator includes the separator manufactured by the above-described method for manufacturing the separator.

In an embodiment of the present disclosure, the positive electrode may be manufactured by coating a positive electrode composition including a positive electrode active material, a binder, a conductive material and a solvent on a positive current collector.

The positive electrode active material may include any positive electrode active material commonly used in the positive electrode of the electrochemical device. For example, the positive electrode active material may include lithium manganese oxide, lithium cobalt oxide, lithium nickel oxide, lithium iron oxide or lithium composite oxide thereof.

In this instance, the positive electrode active material may be included in an amount of 80 wt% to 99 wt%, and preferably 85 wt% to 98 wt% based on the total weight of the solid content of the positive electrode composition. When the amount of the positive electrode active material falls within the aforementioned range, improved capacity characteristics may be provided.

The positive current collector is not limited to a particular one and may include any material having conductivity without causing a chemical change in the corresponding battery. For example, the positive current collector may include stainless steel, aluminum, nickel, titanium, calcined carbon, or aluminum or stainless steel treated with carbon, nickel, titanium or silver on the surface.

The binder is used to assist in holding the active material and the conductive material together and binding to the current collector, and may be generally added in an amount of 1 wt% to 30 wt% based on the total solid weight of the positive electrode composition. Examples of the binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrene-butadiene rubber, fluororubber or a variety of copolymers.

The conductive material may be generally added in an amount of 1 wt% to 30 wt% based on the total solid weight of the positive electrode composition.

The conductive material is not limited to a particular type and may include any material having conductivity without causing a chemical change in the corresponding battery. The conductive material may include, for example, graphite; carbon-based materials such as carbon black, acetylene black, Ketjen black, channel black, furnace black, lamp black or thermal black; conductive fibers such as carbon fibers or metal fibers; fluorocarbon; metal powder such as aluminum powder or nickel powder; conductive whiskers such as zinc oxide whiskers or potassium titanate whiskers; conductive metal oxide such as titanium oxide; or conductive materials such as polyphenylene derivatives. Specific examples of commercially available conductive materials include acetylene black from Chevron Chemical Company or Denka Singapore Private Limited, products from Gulf Oil Company, Ketjenblack, EC series (from Armak Company), Vulcan XC-72 (from Cabot Company), and Super P (Timcal).

In addition, the positive electrode active material layer may optionally further include a dispersant if necessary.

The dispersant is not limited to a particular type and may include any dispersant used for the positive electrode, and for example, an aqueous dispersant or an organic dispersant may be selectively used according to necessity. Preferably, the dispersant may include any one of a cellulose-based compound, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosans, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), acrylonitrile/butadiene/styrene (ABS) polymer, acrylonitrile/styrene/acrylate (ASA) ester polymer, a mixture of acrylonitrile/styrene/acrylate (ASA) ester polymer and propylene carbonate, a styrene/acrylonitrile (SAN) copolymer, methyl methacrylate/acrylonitrile/butadiene/styrene (MABS) polymer, styrene butadiene rubber, nitrile butadiene rubber and fluororubber, or a mixture of two or more thereof. Hydrogenated nitrile butadiene rubber (H-NBR) may be used. When the positive electrode active material layer further includes the dispersant, dispersion of the components of the positive electrode active material layer, particularly the conductive material may be improved, but is not limited thereto.

In addition, the solvent may include any solvent commonly used in the corresponding technical field, and for example, may include any one of dimethylsulfoxide (DMSO), isopropyl alcohol, N-methylpyrrolidone (NMP), acetone or water, or a mixture of two or more thereof. The solvent is used in a sufficient amount for dissolving or dispersing the positive electrode active material, the conductive material and the binder, taking the coating thickness of the slurry and production yield into account, and modifying the viscosity to achieve high thickness uniformity in the subsequent coating process to manufacture the positive electrode.

The negative electrode according to the present disclosure may be manufactured by coating a negative electrode composition including a negative electrode active material, a binder, a conductive material and a solvent on a negative current collector. In addition, the negative electrode composition may optionally further include a dispersant if necessary.

The negative electrode active material may include compounds capable of reversible intercalation and deintercalation of lithium. Preferably, the negative electrode may further include a negative electrode active material exhibiting high-capacity characteristics, for example, a silicon-based negative electrode active material, a carbon-based negative electrode active material, metal composite oxide such as LiₓFe₂O₃ (0≤x≤1), LiₓWO₂ (0≤x≤1), SnₓMe₁ₓMe'_{y}O_{z} (Me: Mn, Fe, Pb, Ge; Me': Al, B, P, Si, Group 1, 2, and 3 elements in the periodic table, halogen; 0<x≤1; 1≤y≤3; 1≤z≤8); lithium metal; lithium alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based material; titanium oxide; or lithium titanium oxide. The silicon-based negative electrode active material may include at least one selected from the group consisting of Si, SiOx (0.1 < x < 5), Si-metal alloy, silicon oxide particles doped or chemically bonded with metal such as Mg (SiOx, 0.1 < x < 5) and Si-SiOx alloy (0.1 < x < 5). The carbon-based negative electrode active material may include at least one selected from the group consisting of natural graphite, artificial graphite, amorphous hard carbon, low-crystalline soft carbon, carbon black, acetylene black, Ketjen black, Super P, graphene and fibrous carbon.

The negative current collector is not limited to a particular type and may include any material having high conductivity without causing a chemical change in the battery, and for example, may include copper, stainless steel, aluminum, nickel, titanium, calcined carbon, copper or stainless steel treated with carbon, nickel, titanium or silver on the surface or aluminum-cadmium alloy. In addition, the negative current collector may be generally 3 µm to 500 µm in thickness, and in the same way as the positive current collector, may have the microtextured surface to increase the bond strength of the negative electrode active material. The negative current collector may come in different forms, for example, a film, a sheet, a foil, a net, a porous body, a foam or a non-woven fabric.

The conductive material, the binder, the solvent or the dispersant included in the negative electrode composition are not limited to a particular one and may include any commonly used one in the electrode composition, and for example, may include the conductive material, the binder, the solvent or the dispersant described above in the positive electrode composition.

In addition, the lithium secondary battery may further include an electrolyte solution. The electrolyte solution may include an organic liquid electrolyte, an inorganic liquid electrolyte, a solid polymer electrolyte, a gel polymer electrolyte, a solid inorganic electrolyte or a molten inorganic electrolyte, used to manufacture the lithium secondary battery, but is not limited thereto.

Specifically, the electrolyte solution may include an organic solvent and a lithium salt.

The organic solvent is not limited to a particular type and may include any organic solvent that acts as a medium for the movement of ions involved in the electrochemical reaction of the battery. Specifically, the organic solvent may include ester-based solvents such as methyl acetate, ethyl acetate, γ-butyrolactone or ε-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethylcarbonate (DMC), diethylcarbonate (DEC), methylethylcarbonate (MEC), ethylmethylcarbonate (EMC), ethylene carbonate (EC) or propylene carbonate (PC); alcohol-based solvents such as ethyl alcohol or isopropyl alcohol; nitriles such as R-CN (R is a C2 to C20 straight-chain, branched-chain or cyclic hydrocarbon, and may comprise an exocyclic double bond or ether bond); amides such as dimethylformamide; dioxolanes such as 1,3-dioxolane; or sulfolanes. Among them, a carbonate-based solvent is preferable, and a mixture of a cyclic carbonate (for example, ethylene carbonate or propylene carbonate) having high ionic conductivity and high dielectric constant that contributes to the improved charge/discharge performance of the battery and a low-viscosity linear carbonate-based compound (for example, ethyl methyl carbonate, dimethyl carbonate or diethyl carbonate) is more preferable. In this case, when the cyclic carbonate and the linear carbonate are mixed at a volume ratio of about 1:1 to about 1:9, the electrolyte solution may have high performance.

The lithium salt is not limited to a particular type and may include any compound capable of providing lithium ions used in the lithium secondary battery. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI or LiB(C₂O₄)₂. The concentration of the lithium salt may be in a range of 0.1 M to 2.0 M. When the concentration of the lithium salt falls within the aforementioned range, the electrolyte solution may have optimal conductivity and viscosity, resulting in high performance of the electrolyte solution and effective movement of lithium ions.

In addition to the above-described components of the electrolyte solution, the electrolyte solution may further include, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in order to improve the life characteristics of the battery, prevent the capacity fading of the battery and improve the discharge capacity of the battery. In this instance, the additive may be included in an amount of 0.1 to 5 parts by weight based on the total weight 100 parts by weight of the electrolyte solution.

Hereinafter, the present disclosure will be described in more detail through examples, but the following examples are intended to describe the present disclosure by way of illustration, and the scope of the present disclosure is not limited thereto.

### Example 1

Aluminum oxide (Al₂O₃, D₅₀: 450 nm, Sumitomo) as inorganic particles and silica (SiO₂, D₅₀: 100 nm) as pore-inducing particles were added to water at room temperature and evenly stirred, and an acrylic particle-type binder (polyacrylate, Tg: 40°C, D₅₀: 400 nm) and a fluorine-based particle-type binder (PVDF, Tg: 40°C, D₅₀: 400 nm) were added at a weight ratio of 1:1 to prepare a separator coating slurry composition. The solid content of the slurry composition was 35 wt%. In addition, a weight ratio of the inorganic particles : the acrylic particle-type binder : the fluorine-based particle-type binder : the pore-inducing particles was 85:5:5:5.

The separator coating slurry composition was applied to two surfaces of a polyethylene substrate (thickness: 12 µm, porosity: 70 vol%) using a doctor blade, followed by solvent drying to form a porous coating layer. After the drying, the porous coating layer had a thickness of about 5.0 µm based on one side.

Subsequently, the separator having the porous coating layer was immersed in hydrogen fluoride (concentration: 35%) as an etching solution for 10 minutes to remove the pore-inducing particles (SiO₂), and ethanol was added to wash. After the washing, drying was performed at the temperature of 60°C for 2 hours to manufacture a separator having a thickness of about 22 µm.

### Comparative Example 1

Aluminum oxide (Al₂O₃, D₅₀: 450 nm, Sumitomo) as inorganic particles was added to water at room temperature and evenly stirred, and an acrylic particle-type binder (polyacrylate, Tg: 40°C, D_{50:}400 nm) and a fluorine-based particle-type binder (PVDF, Tg: 40°C, D₅₀: 400 nm) were added at a weight ratio of 1:1 to prepare a separator coating slurry composition. The solid content of the slurry composition was 35 wt%. In addition, a weight ratio of the inorganic particles : the acrylic particle-type binder : the fluorine-based particle-type binder was 90:5:5.

The separator coating slurry composition was applied to two surfaces of a polyethylene substrate (thickness: 12 µm, porosity: 70 vol%) using a doctor blade, followed by solvent drying to form a porous coating layer. After the drying, the porous coating layer had a thickness of about 5.0 µm based on one side.

### EXPERIMENTAL EXAMPLE

### Experimental Example 1: Wetting evaluation of separator

LiCoO₂ as a positive electrode active material, carbon black as a conductive material and polyvinylidene fluoride (PVdF) as a binder were added to N-methylpyrrolidone (NMP) as a solvent at a weight ratio of 96:2:2 to prepare a positive electrode active material slurry. The positive electrode active material slurry was coated on a sheet-shaped aluminum current collector and dried to prepare a positive electrode with final positive electrode loading of 4.0 mAh/cm².

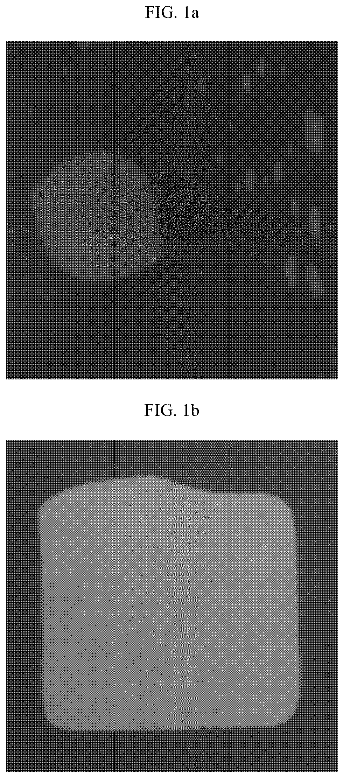

The separator of each of Example 1 and Comparative Example 1 was placed on the as-prepared positive electrode, and a transparent PET film was stacked on the separator, and subjected to the pressure of 6.5 MPa at the temperature of 70°C for 1 second to produce a laminate. Subsequently, 1 M LiPF₆ was dissolved in an organic solvent (EC:DEC = 1:1 (v:v)) to prepare a non-aqueous electrolyte solution and the laminate was filled with the electrolyte solution to perform a wetting test. Subsequently, imaging was carried out on the transparent PET side, and the wetting area to the total area was calculated. The results are shown in FIGS. 1a and 1b.

According to FIG. 1a, the separator of Example 1 was completely wetted to the core, but according to FIG. 1b, in the case of Comparative Example 1, only the outer area of the separator was wetted, and the wetting area was 50% of the total area. That is, it was confirmed that the separator of Example 1 had enhanced wetting by removal of at least some of the pore-inducing particles by an etching solution.

### Experimental Example 2: Surface analysis of separator

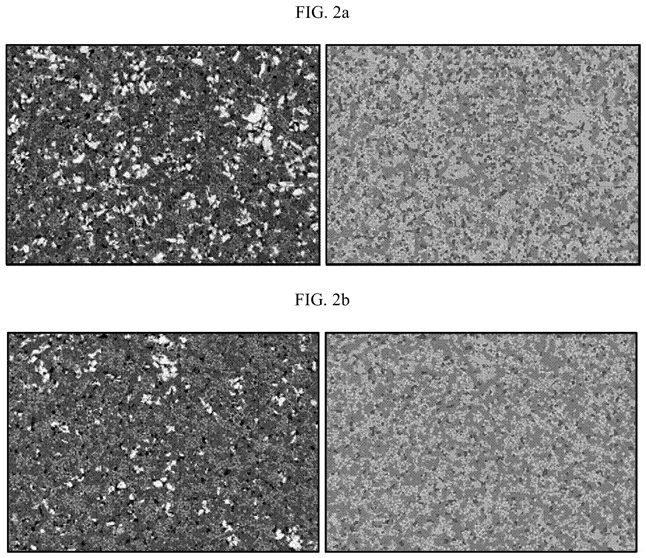

The surfaces of the separators of Example 1 and Comparative Example 1 were measured using a scanning electron microscope (SEM, Hitachi). The measured separator surface was analyzed through the IAM (Image Analysis Management, LG Energy Solution) program to determine the particle shape so as to identify the inorganic particles, the pores, the acrylic particle-type binder and the fluorine-based particle-type binder, followed by masking. FIGS. 2a and 2b show the area occupied by each of the inorganic particles, the pores, the acrylic particle-type binder and the fluorine-based particle-type binder on the surface. In this instance, the pore was represented in red, the acrylic particle-type binder was represented in dark green, the fluorine-based particle-type binder was represented in light green, and the inorganic particle was represented in gray.

FIG. 2a is an SEM image of the surface of the separator of Example 1 and an IAM program-assisted masking image of the inorganic particles, the pores, the acrylic particle-type binder and the fluorine-based particle-type binder. According to FIG. 2a, it was confirmed that a surface area ratio of the pores: the acrylic particle-type binder: the fluorine-based particle-type binder: the inorganic material was 6.5:45.5:30.5:17.6.

FIG. 2b is an SEM image of the surface of the separator of Comparative Example 1 and an IAM program-assisted masking image of the inorganic particles, the pores, the acrylic particle-type binder and the fluorine-based particle-type binder. According to FIG. 2b, it was confirmed that a surface area ratio of the pores: the acrylic particle-type binder: the fluorine-based particle-type binder: the inorganic material was 2.5:55.7:34.6:7.2.

It was confirmed that the separator of Example 1 had a higher ratio of pores and inorganic material on the surface than Comparative Example 1 by removal of at least some of the pore-inducing particles by an etching solution.

### Experimental Example 3: Permeability measurement

The permeability of the separators of Example 1 and Comparative Example 1 was measured. Specifically, the air permeation time of each of Example and Comparative Example was determined by measuring the time (sec) it takes for 100 ml of air to pass through the separator by using a permeability measuring instrument (Manufacturer: Asahi Seiko, Model: EG01-55-1MR). Measurements were done at three points of the sample, i.e., a left point/a middle point/a right point, and the average was recorded.

As a result, the permeability of the separator of Example 1 was 70 sec/100cc, and the permeability of the separator of Comparative Example 1 was 60 sec/100cc. That is, it was confirmed that the air permeation time of the separator of Example 1 was shorter than the air permeation time of Comparative Example 1 and the separator of Example 1 had higher permeability.

### Other measurement method

### Glass transition temperature measurement

The glass transition temperature was measured by differential scanning calorimetry (DSC). The measurement of the glass transition temperature by DSC was performed by measuring the amount of heat with changes in temperature within a range of - 80°C to 300°C by using Discovery DSC 250 from TA Instruments. Specifically, the sample to be measured was subjected to temperature changes of 25°C (start) -> 250°C (first heating) -> -80°C (first cooling) -> 300°C at the rate of 10°C/min in the order of first heating -> first cooling -> second heating.

## Claims

1. A method for manufacturing a separator, the method comprising:
(S10) preparing a separator coating slurry composition including pore-inducing particles; inorganic particles; a particle-type binder and a solvent;
(S20) applying the separator coating slurry composition to at least one surface of a porous polymer substrate to form a porous coating layer;
(S30) removing at least some of the pore-inducing particles of the porous coating layer by an etching solution; and
(S40) drying the porous coating layer from which the at least some pore-inducing particles have been removed.

2. The method for manufacturing the separator according to claim 1,
wherein the pore-inducing particles are a material that reacts with the etching solution.

3. The method for manufacturing the separator according to claim 1,
wherein the pore-inducing particles include silica (SiO₂), titania (TiO₂), zirconia (ZrO₂), or two or more thereof.

4. The method for manufacturing the separator according to claim 1,
wherein the etching solution includes hydrogen fluoride, sodium hydroxide, potassium hydroxide, nitric acid, hydrogen peroxide, carbonic acid, or two or more thereof.

5. The method for manufacturing the separator according to claim 1,
wherein in the (S10), an amount of the pore-inducing particles in the separator coating slurry composition is 20 to 90 parts by weight based on 100 parts by weight of the inorganic particles.

6. The method for manufacturing the separator according to claim 1,
wherein a D₅₀ of the pore-inducing particles is 20 nm to 500 nm.

7. The method for manufacturing the separator according to claim 1,
wherein the particle-type binder includes an acrylic particle-type binder, a fluorine-based particle-type binder, or a combination thereof.

8. The method for manufacturing the separator according to claim 1,
wherein a glass transition temperature (Tg) of the particle-type binder is 40°C to 80°C.

9. The method for manufacturing the separator according to claim 1,
wherein a D₅₀ of the particle-type binder is 150 nm to 1 µm.

10. The method for manufacturing the separator according to claim 1,
wherein the porous polymer substrate includes polyethylene, polypropylene, polyimide, polyethylene terephthalate, polyamide, polysulfone, polyvinylidene fluoride, polyacrylonitrile, or two or more thereof.

11. The method for manufacturing the separator according to claim 1,
wherein the (S20) further includes (S21) drying the solvent in the separator coating layer slurry composition after applying the slurry composition to the at least one surface of the porous polymer substrate.

12. The method for manufacturing the separator according to claim 11, after the (S21), further comprising;
(S22) applying a pressure of 0.5 MPa to 20 MPa to the separator in a temperature condition of 20°C to 85°C for 1 second to 60 seconds.

13. The method for manufacturing the separator according to claim 1, after the (S40), further comprising:
(S41) applying a pressure of 0.5 MPa to 20 MPa to the separator in a temperature condition of 20°C to 85°C for 1 second to 60 seconds.

14. A separator manufactured by the method for manufacturing the separator defined in claim 1, the separator comprising:
the porous polymer substrate; and
the porous coating layer present on the at least one surface of the porous polymer substrate, the porous coating layer including the inorganic particles and the particle-type binder,
wherein the porous coating layer includes pores formed by the removal of the at least some of the pore-inducing particles by the etching solution.

15. The separator according to claim 14,
wherein a porosity of the separator is 10 vol% to 50 vol%.

16. A lithium secondary battery comprising:
a positive electrode; a negative electrode; an electrolyte solution; and a separator interposed between the positive electrode and the negative electrode,
wherein the separator is defined in claim 14.
